# EUROPEAN PATENT APPLICATION

(11) **EP 4 203 102 A1**
(43) Date of publication of application: **28.06.2023**
(21) Application number: 22806207.1
(22) Date of filing: 20.01.2022
(51) Int. Cl.: H01M 4/36, H01M 4/525, H01M 4/505

(54) **BORON OXIDE-COATED QUATERNARY POSITIVE ELECTRODE MATERIAL, AND PREPARATION METHOD THEREFOR AND APPLICATION THEREOF**

(30) Priority: 12.05.2021 CN 202110517419
(71) Applicant: SVOLT ENERGY TECHNOLOGY CO., LTD, Changzhou, Jiangsu 213200 (CN)
(72) Inventor: WANG, Zhuang, hangzhou, Jiangsu 213200 (CN); ZHANG, Shutao, hangzhou, Jiangsu 213200 (CN); LI, Zitan, hangzhou, Jiangsu 213200 (CN); WANG, Yazhou, hangzhou, Jiangsu 213200 (CN); MA, Jiali, hangzhou, Jiangsu 213200 (CN); BAI, Yan, hangzhou, Jiangsu 213200 (CN)
(74) Representative: Fuchs Patentanwälte Partnerschaft mbB
(86) International application number: PCT/CN2022/073037
(87) International publication number: WO 2022/237230

(57) **Abstract**

The present disclosure provides a boron oxide-coated quaternary cathode electrode material and a preparation method and application thereof. The boron oxide-coated quaternary cathode electrode material includes a quaternary cathode electrode material matrix and a boron oxide coating layer, the boron oxide coating layer is arranged on the surface of the quaternary cathode electrode material matrix, and the quaternary cathode electrode material matrix is LiₐNiₓCo_{y}Mn_{z}Al_{(1-x-y-z)}O₂, herein a=1-1.06, x=0.8-0.9, y=0.01-0.1, and z=0.01-0.1. By having the uniform and complete boron oxide coating layer on the surface of the quaternary cathode electrode material matrix, the above coating layer is a B₂O₃ coating layer, which may effectively reduce a contact area between the quaternary cathode electrode material matrix in the boron oxide-coated quaternary cathode electrode material and an electrolyte, thereby side reactions on the surface of the quaternary cathode electrode material are reduced in the charging and discharging process, and the cycle stability of the cathode electrode material is improved.

## Description

### Technical Field

The present disclosure relates to the field of lithium ion batteries, in particular to a boron oxide-coated quaternary cathode electrode material and a preparation method and application thereof.

### Background

Lithium-ion batteries already become a most widely used electrochemical power source at present, and the most representative of such batteries is lithium secondary batteries (LIBs) that generate electrical energy by the intercalation and deintercalation of lithium ions in positive and anode electrodes to generate a chemical potential change. Cathode electrode materials have a direct dominant effect on the performance of LIBs, so many researchers are committed to achieve a cathode electrode material with large capacity, fast charging/discharging speed, and long cycle life, which may perform the reversible intercalation and deintercalation of lithium ions. At present, a high-nickel material is considered as the most promising candidate material, because it may improve the specific capacity of the lithium-ion batteries by increasing the nickel content. However, the resulting poor cycle stability of the lithium-ion batteries may hinder the success of this method.

In addition, a quaternary polycrystalline material in the high-nickel material has more advantages in safety and cycle stability than a ternary cathode electrode material, and is one of the most promising materials at present. However, an existing mode of reducing a residual alkali in the high-nickel quaternary cathode electrode material mainly relies on a water washing process, but after water washing, a lithium residue is removed, and because the lithium ions in a crystal lattice have a larger concentration difference with the lithium ions outside the crystal lattice, the material is more likely to generate a delithiation reaction without electron transfer, and then more likely to generate the Ni³⁺/Ni²⁺ transformation; and the surface of the material after water washing is rough, the specific surface area becomes larger, the contact area with an electrolyte is larger, and a side reaction is more intense. In order to solve this problem, a commonly used modification mode is material surface coating, but for the high-nickel quaternary cathode electrode material, high-temperature coating may lead to lithium precipitation on the surface of the material and pH increase, so low-temperature coating is required, and a commonly used low-temperature coating agent is mainly a boric acid, but a dehydration phenomenon occurs in the high-speed mixing process of the boric acid and the cathode electrode material due to the temperature increase, so that the coating on the surface of the material is uneven, and a part of the high-nickel quaternary cathode electrode material is not coated, it may still contact with the electrolyte so as to generate the side reaction, resulting in the poor cycle stability of the battery.

### Summary

A main purpose of the present disclosure is to provide a boron oxide-coated quaternary cathode electrode material and a preparation method and application thereof, as to solve a problem in an existing technology that the quaternary cathode electrode material is poor in cycle stability.

In order to achieve the above purpose, according to one aspect of the present disclosure, a boron oxide-coated quaternary cathode electrode material is provided, and the boron oxide-coated quaternary cathode electrode material includes a quaternary cathode electrode material matrix and a boron oxide coating layer, the boron oxide coating layer is arranged on the surface of the quaternary cathode electrode material matrix, and the quaternary cathode electrode material matrix is LiₐNiₓCo_{y}Mn_{z}Al_{(1-x-y-z)}O₂, herein a=1-1.06, x=0.8-0.9, y=0.01-0.1, and z=0.01-0.1.

Further, the particle diameter of the above quaternary cathode electrode material is 8-12 µm.

Further, the thickness of the above boron oxide coating layer is 5-10 nm.

According to another aspect of the present disclosure, a preparation method for a boron oxide-coated quaternary cathode electrode material is provided, and the preparation method includes: performing first oxidative sintering on a mixture including a quaternary cathode electrode material matrix and a boron source, to obtain the boron oxide-coated quaternary cathode electrode material, herein the quaternary cathode electrode material matrix is LiₐNiₓCo_{y}Mn_{z}Al_{(1-x-y-z)}O₂, herein a=1-1.06, x=0.8-0.9, y=0.01-0.1, and z=0.01-0.1, and the boron source is selected from one or both of a metaboric acid and a pyroboric acid.

Further, the sintering temperature of the above first oxidative sintering is 150-350°C, and the time is 4-12 h.

Further, the above first oxidative sintering is divided into a first stage and a second stage which are performed in sequence, and the sintering temperature of the first stage is lower than the sintering temperature of the second stage.

Further, the sintering temperature of the above first stage is 150-200°C, and the time is 1-5 h.

Further, the sintering temperature of the above second stage is 200-350°C, and the time is 3-7 h.

Further, the mass ratio of the above boron source to the quaternary cathode electrode material matrix is 0.001-0.003:1.

Further, the first oxidative sintering is performed in a first oxygen-containing gas.

Further, the volume concentration of oxygen in the above first oxygen-containing gas is 20-100%, and the flow rate of the first oxygen-containing gas is 10-20 L/min.

Further, the above preparation method further includes a mixing process of mixing the quaternary cathode electrode material matrix and the boron source, to obtain the mixture.

Further, the above mixing process includes: mixing the quaternary cathode electrode material matrix and the boron source and performing first stirring, to obtain the mixture of the quaternary cathode electrode material matrix and the boron source.

Further, the speed of the above first stirring is 2000-3000 rpm, and the time is 10-20 min.

Further, the above preparation method further includes a preparation process of a quaternary cathode electrode material matrix, and the preparation process includes: performing second oxidative sintering on a mixture of NiₓCo_{y}Mn_{z}Al_{(1-x-y-z)}OH and LiOH, to obtain the quaternary cathode electrode material matrix.

Further, the molar ratio of the above LiOH and NiₓCo_{y}Mn_{z}Al_{(1-x-y-z)}OH is 1-1.5:1.

Further, the sintering temperature of the above second oxidative sintering is 650-800°C, and the time is 4-12 h.

Further, the second oxidative sintering is performed in a second oxygen-containing gas.

Further, the volume concentration of oxygen in the above second oxygen-containing gas is 20-100%, and the flow rate of the second oxygen-containing gas is 5-10 L/min.

Further, the above preparation method further includes a washing process of the quaternary cathode electrode material matrix, and the washing process includes: after performing second stirring on dispersion liquid containing washing liquid and the quaternary cathode electrode material matrix, drying.

Further, the speed of the above second stirring is 200-400 rpm, and the time is 5-15 min.

Further, the temperature of the above drying is 100-200°C, and the time is 5-15 h.

Further, the above washing liquid includes water.

According to another aspect of the present disclosure, a lithium-ion battery is provided, the lithium-ion battery includes a cathode electrode material, a anode electrode material and an electrolyte, the cathode electrode material includes a quaternary cathode electrode material, and the quaternary cathode electrode material is any one of the above boron oxide-coated quaternary cathode electrode materials or the boron oxide-coated quaternary cathode electrode material prepared by any one of the above preparation methods.

A technical scheme of the present disclosure is applied, by oxidizing and sintering the boron source including the metaboric acid and/or the pyroboric acid together with the quaternary cathode electrode material matrix, since the metaboric acid and the pyroboric acid release the less water at a high temperature than the boric acid, while the oxidative sintering is performed to form the boron oxide coating layer, there is not a problem that the boron source and the quaternary cathode electrode material matrix are difficult to mix uniformly due to the release of the water in the boric acid and the viscosity of a system, thereby the uniform coating of the quaternary cathode electrode material matrix may be achieved, the contact area between the quaternary cathode electrode material matrix in the boron oxide-coated quaternary cathode electrode material after the oxidative sintering and the electrolyte is effectively reduced, side reactions on the surface of the quaternary cathode electrode material in the charging and discharging processes are reduced, and the cycle stability of the cathode electrode material is improved. In addition, because the metaboric acid and the pyroboric acid need to remove the less water than the boric acid, the reaction efficiency of the above oxidative sintering is improved.

### Brief Description of the Drawings

Drawings constituting a part of the present application are used to provide further understanding of the present disclosure, and exemplary embodiments of the present disclosure and descriptions thereof are used to explain the present disclosure, and do not constitute improper limitation to the present disclosure. In the drawings:

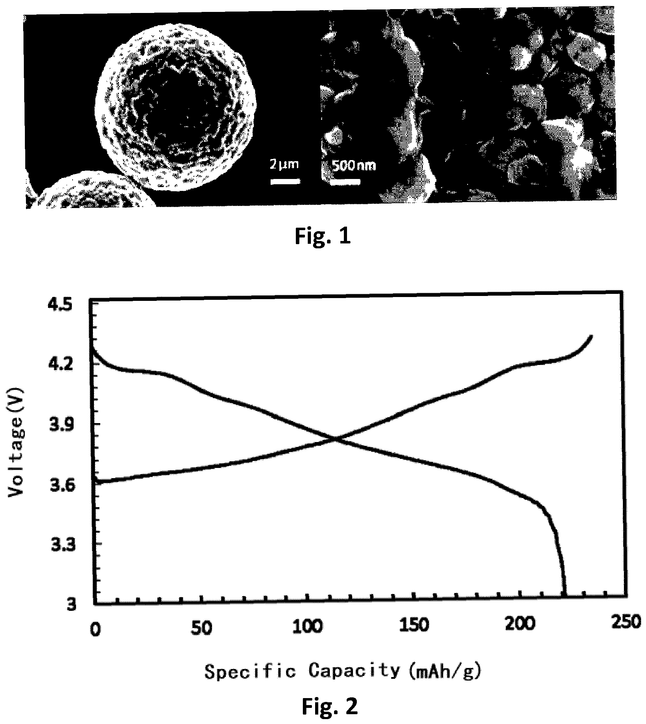

Fig. 1 shows a scanning electron microscope image of a quaternary cathode electrode material prepared according to Embodiment 1 of the present disclosure.
Fig. 2 shows a first charging-discharging curve diagram of the quaternary cathode electrode material prepared according to Embodiment 1 of the present disclosure.
Fig. 3 shows a first charging-discharging curve diagram of a quaternary cathode electrode material prepared according to Contrast example 1 of the present disclosure.
Fig. 4 shows a one-stage oxidative sintering temperature rise curve diagram of a boron oxide-coated quaternary cathode electrode material prepared according to Embodiment 1 of the present disclosure.

### Detailed Description of the Embodiments

It should be noted that embodiments in the present application and features of the embodiments may be combined with each other in the case without conflicting. The present disclosure is described in detail below with reference to the drawings and in combination with the embodiments.

As described in the background of the present application, a coated quaternary cathode electrode material is prepared by using a boric acid as a raw material in the existing technology, due to uneven coating, a part of the quaternary cathode electrode material is exposed, this part of the quaternary cathode electrode material may generate a violent side reaction with an electrolyte in the using process, so that the cycle performance of a lithium-ion battery is reduced. In order to solve the above problem, the present application provides a boron oxide-coated quaternary cathode electrode material and a preparation method and application thereof.

According to a typical implementation mode of the present application, a boron oxide-coated quaternary cathode electrode material is provided, the boron oxide-coated quaternary cathode electrode material includes a quaternary cathode electrode material matrix and a boron oxide coating layer, the boron oxide coating layer is arranged on the surface of the quaternary cathode electrode material matrix, and the quaternary cathode electrode material matrix is LiₐNiₓCo_{y}Mn_{z}Al_{(1-x-y-z)}O₂, herein a=1-1.06, x=0.8-0.9, y=0.01-0.1, and z= 0.01-0.1.

By having the uniform and complete boron oxide coating layer on the surface of the quaternary cathode electrode material matrix, the above coating layer is a B₂O₃ coating layer, which may effectively reduce a contact area between the quaternary cathode electrode material matrix in the boron oxide-coated quaternary cathode electrode material and an electrolyte, thereby side reactions on the surface of the quaternary cathode electrode material are reduced in the charging and discharging process, and the cycle stability of the cathode electrode material is improved.

Since there is almost no active substance in the boron oxide coating layer of the present application, the proportion size of the boron oxide coating layer in the boron oxide-coated quaternary cathode electrode material may affect its electrical performance. Further preferably, the particle diameter of the quaternary cathode electrode material is 8-12 µm, and preferably the thickness of the boron oxide coating layer is 5-10 nm. On the one hand, the boron oxide-coated quaternary cathode electrode material that meets the above conditions may give full play to the reduction effect of a boron oxide on the side reactions, and on the other hand, the material contains more active substances, so that the material has the better electrical performance.

In order to facilitate those skilled in the art to obtain the above boron oxide-coated quaternary cathode electrode material of the present application, according to another typical implementation mode of the present application, a preparation method for a boron oxide-coated quaternary cathode electrode material is provided, and the preparation method includes: performing first oxidative sintering on a mixture including a quaternary cathode electrode material matrix and a boron source, to obtain the boron oxide-coated quaternary cathode electrode material, herein the quaternary cathode electrode material matrix is LiₐNiₓCo_{y}Mn_{z}Al_{(1-x-y-z)}O₂, herein a=1-1.06, x=0.8-0.9, y=0.01-0.1, and z=0.01-0.1, and the boron source is selected from one or both of a metaboric acid and a pyroboric acid.

By oxidizing and sintering the boron source including the metaboric acid and/or the pyroboric acid together with the quaternary cathode electrode material matrix, since the metaboric acid and the pyroboric acid release the less water at a high temperature than the boric acid, while the oxidative sintering is performed to form the boron oxide coating layer, there is not a problem that the boron source and the quaternary cathode electrode material matrix are difficult to mix uniformly due to the release of the water in the boric acid and the viscosity of a system, thereby the uniform coating of the quaternary cathode electrode material matrix may be achieved, the contact area between the quaternary cathode electrode material matrix in the boron oxide-coated quaternary cathode electrode material after the oxidative sintering and the electrolyte is effectively reduced, side reactions on the surface of the quaternary cathode electrode material in the charging and discharging processes are reduced, and the cycle stability of the cathode electrode material is improved. In addition, because the metaboric acid and the pyroboric acid need to remove the less water than the boric acid, the reaction efficiency of the above oxidative sintering is improved.

In some embodiments, the sintering temperature of the first oxidative sintering is 150-350°C, and the time is 4-12 h. By performing the above oxidative sintering at a lower temperature, on the one hand, a lithium precipitation problem caused by the sintering of the quaternary cathode electrode material at a higher temperature may be avoided, and the loss of lithium in the quaternary cathode electrode material matrix maybe minimized. On the other hand, the overall energy consumption and cost of the preparation method are effectively reduced, so that the cathode electrode material with the better performance may be obtained on the basis of reducing the process cost.

In view of a fact that the metaboric acid and the pyroboric acid may have a water loss process at the high temperature, in order to guarantee the sufficient removal of water and effectively improve the mixing uniformity of a boron element and the quaternary cathode electrode material matrix in the water removal process, in some embodiments, the above first oxidative sintering is divided into a first stage and a second stage which are performed in sequence, and the sintering temperature of the first stage is lower than the sintering temperature of the second stage. By the low-temperature sintering in the above first stage, the water in the metaboric acid and the pyroboric acid is removed, and then an oxidative sintering reaction is performed at the high temperature. Preferably, the sintering temperature of the above first stage is 150-200°C, and the time is 1-5 h. Preferably, the sintering temperature of the above second stage is 200-350°C, and the time is 3-7 h. In the first stage, the oxidative sintering is performed at the above lower temperature, to form a uniform molten body coated on the surface of the quaternary cathode electrode material matrix, and then it is heated to above 200°C, the molten body undergoes the oxidative sintering reaction to form a boron oxide coating layer coated tightly. The bonding stability of the oxide coating layer and the quaternary cathode electrode material matrix is effectively improved, and the uniformity of the coating layer itself is improved at the same time. By the above two-stage low-temperature oxidative sintering, the contact area between the quaternary cathode electrode material matrix and the electrolyte in applications is reduced, the occurrence of the side reactions is further reduced, and the capacity and cycle retention rate of the cathode electrode material are further improved. In addition, due to the lower calcination temperature, the beneficial effects of energy saving, efficiency enhancement and cost reduction are achieved.

As mentioned above, the ratio between the boron oxide coating layer and the matrix may affect the electrical performance of the cathode electrode material. In order to control the ratio of the two more precisely, the mass ratio of the boron source to the quaternary cathode electrode material matrix is preferably 0.001-0.003:1. The flow rate and oxygen content of the oxygen-containing gas may affect the speed of the reaction. In order to improve the formation speed and compactness of the coating layer as much as possible and avoid the gas waste, preferably the first oxidative sintering is performed in a first oxygen-containing gas, preferably the volume concentration of oxygen in the first oxygen-containing gas is 20-100%, and the flow rate of the first oxygen-containing gas is 10-20 L/min. Within the above numerical range, the formation speed of the boron oxide coating layer is controlled within a relatively appropriate range, and its uniformity and the bonding strength with the matrix are further guaranteed.

Before the mixture of the quaternary cathode electrode material matrix and the boron source is sintered, in order to improve the uniformity of mixing the two, the two may be mixed in advance by mechanical means. For example, in some embodiments, the above preparation method further includes: a mixing process of mixing the quaternary cathode electrode material matrix and the boron source, to obtain the mixture. Preferably the above mixing process includes: mixing the quaternary cathode electrode material matrix and the boron source and performing first stirring, preferably the speed of the first stirring is 2000-3000 rpm, and the time is 10-20 min, to obtain the mixture of the quaternary cathode electrode material matrix and the boron source. As mentioned above, while the boric acid is used for coating in the existing technology, and while the stirring speed is relatively high, the boric acid may be dehydrated to form a viscous melt, so that the coating to the quaternary cathode electrode material matrix by the boric acid is uneven; and after the stirring speed is reduced, the dispersion of the boric acid may not achieve the desired effect similarly. The contents of hydrogen and oxygen in the metaboric acid and the pyroboric acid used in the present application are relatively low, so in the process of high-speed stirring, a dehydration phenomenon may not occur due to the temperature rise, the uniformity of material mixing is guaranteed.

LiNiₓCo_{y}Mn_{z}Al_{(1-x-y-z)}O₂ used in the present application may be an existing material in the existing technology or the material is prepared by a known method in the existing technology. In some embodiments, the preparation method further includes a preparation process of the quaternary cathode electrode material matrix. The preparation process includes: performing second oxidative sintering on a mixture of NiₓCo_{y}Mn_{z}Al_{(1-x-y-z)}OH and LiOH, to obtain the quaternary cathode electrode material matrix. Preferably the molar ratio of LiOH and NiₓCo_{y}Mn_{z}Al_{(1-x-y-z)}OH is 1-1.5:1, preferably the sintering temperature of the second oxidative sintering is 650-800°C, and the time is 4-12 h. Preferably the second oxidative sintering is performed in a second oxygen-containing gas, preferably the volume concentration of oxygen in the second oxygen-containing gas is 20-100%, and the flow rate of the second oxygen-containing gas is 5-10 L/min. By preparing the quaternary cathode electrode material matrix, the morphology and element ratio of the matrix material may be designed and controlled, and the matrix material more suitable for the boron oxide coating of the present application may be obtained, so that the electrical performance of the cathode electrode material are further improved.

In order to remove an unreacted substance after sintering in the present application, the quaternary positive elecrtode material matrix may be washed by a method commonly used in the existing technology. Therefore, in some embodiments, preferably the above preparation method further includes a washing process of the quaternary cathode electrode material matrix, and the washing process includes: after performing second stirring on dispersion liquid containing washing liquid and the quaternary cathode electrode material matrix, drying. Preferably the speed of the second stirring is 200-400 rpm, and the time is 5-15 min. Preferably the temperature of the drying is 100 -200°C, and the time is 5-15 h. Preferably the washing liquid includes water. By the above washing method, a residual alkali may be removed as much as possible.

According to another typical implementation mode of the present application, a lithium-ion battery is provided, the lithium-ion battery includes a cathode electrode material, a anode electrode material and an electrolyte, the cathode electrode material includes a quaternary cathode electrode material, and the quaternary cathode electrode material is any one of the above boron oxide-coated quaternary cathode electrode materials or the boron oxide-coated quaternary cathode electrode material prepared by any one of the above preparation methods.

Because the boron oxide-coated quaternary cathode electrode material of the present application has the uniform coating of the boron oxide, the contact area between the quaternary cathode electrode material matrix in the boron oxide-coated quaternary cathode electrode material and the electrolyte is effectively reduced, thereby the side reactions on the surface of the quaternary cathode electrode material are reduced in the charging and discharging processes, and the cycle stability of the cathode electrode material is improved.

The beneficial effects of the present application are further described below in combination with the embodiments and contrast examples.

### Embodiment 1

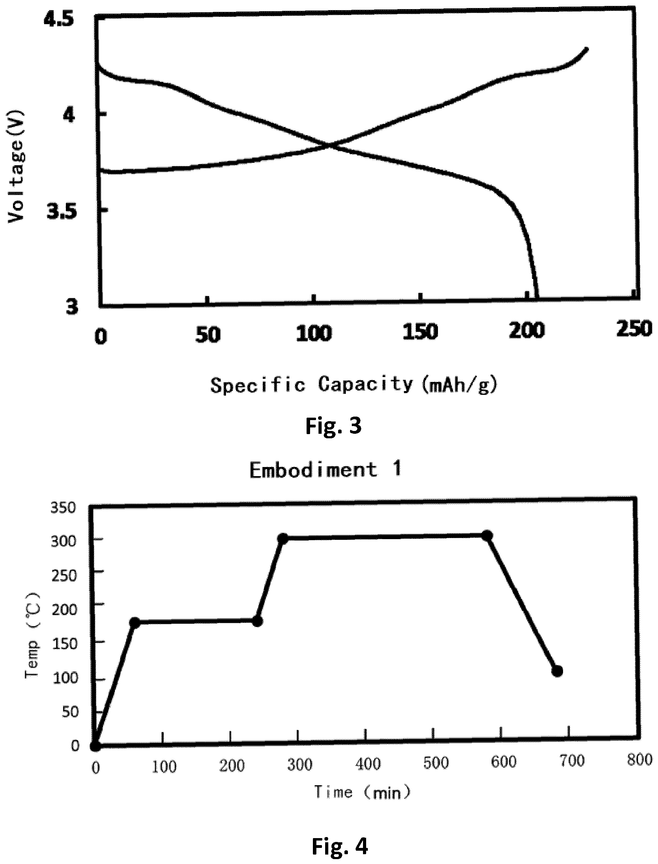

(1) A nickel-cobalt-manganese-aluminum hydroxide (molar ratio: Ni:Co:Mn:AI=90:7:2:1) and LiOH are dry-mixed in a mixer according to a molar ratio of 1:1.025, a dry-mixed material is calcined in an ordinary box-type furnace at 700°C under an oxygen atmosphere (the flow rate is 20 L/min) for 8 h, cooled, pulverized and sieved, to obtain a quaternary cathode electrode material matrix.
(2) The obtained quaternary cathode electrode material matrix is mixed with distilled water according to a ratio of 1:1, and after being stirred at 300 rpm for 10 minutes, it is placed in a vacuum drying oven at 150°C for 10 h, and taken out after drying.
(3) The dried quaternary cathode electrode material matrix and HBO₂ are dry-mixed according to a mass ratio of 1:0.001, and steps of the dry-mixing are as follows: firstly the quaternary cathode electrode material matrix and HBO₂ are stirred at a high speed (the speed is 2500 rpm), and stirred for 10 minutes, so that metaboric acid powder is evenly adhered to the surface of nickel-cobalt-manganese-aluminum hydroxide particles. The dry-mixed material is calcined at 180°C under the oxygen atmosphere (the flow rate is 10 L/min) for 3 h (a first stage of oxidative calcination), and then the temperature is risen to 300°C and kept for 5 h (a second stage of oxidative calcination, and see Fig. 4 for a specific heating method), it is cooled and sieved, to obtain the boron oxide-coated cathode electrode material.

### Embodiment 2

A difference from Embodiment 1 is that in the step (3), the stirring speed of the dry-mixing is 2000 rpm.

### Embodiment 3

A difference from Embodiment 1 is that in the step (3), the stirring speed of the dry-mixing is 3000 rpm.

### Embodiment 4

A difference from Embodiment 1 is that in the step (3), the stirring speed of the dry-mixing is 1000 rpm.

### Embodiment 5

A difference from Embodiment 1 is that in the step (3), the stirring speed of the dry-mixing is 4000 rpm.

### Embodiment 6

A difference from Embodiment 1 is that in the step (3), the temperature of the first stage of the oxidative calcination is 150°C.

### Embodiment 7

A difference from Embodiment 1 is that in the step (3), the temperature of the first stage of the oxidative calcination is 200°C.

### Embodiment 8

A difference from Embodiment 1 is that in the step (3), the temperature of the first stage of the oxidative calcination is 120°C.

### Embodiment 9

A difference from Embodiment 1 is that in the step (3), the temperature of the first stage of the oxidative calcination is 230°C.

### Embodiment 10

A difference from Embodiment 1 is that in the step (3), the temperature of the second stage of the oxidative calcination is 200°C.

### Embodiment 11

A difference from Embodiment 1 is that in the step (3), the temperature of the second stage of the oxidative calcination is 350°C.

### Embodiment 12

A difference from Embodiment 1 is that in the step (3), the temperature of the second stage of the oxidative calcination is 190°C.

### Embodiment 13

A difference from Embodiment 1 is that in the step (3), the temperature of the second stage of the oxidative calcination is 380°C.

### Embodiment 14

A difference from Embodiment 1 is that in the step (3), the dry-mixed material is calcined at 300°C under the oxygen atmosphere for 8 h, cooled and sieved, to obtain the boron oxide-coated cathode electrode material.

### Embodiment 15

A difference from Embodiment 1 is that in the step (3), the nickel-cobalt-manganese-aluminum oxide and HBO₂ are mixed according to a mass ratio of 1:0.003 in the first stage of the oxidative calcination.

### Embodiment 16

A difference from Embodiment 1 is that in the step (3), the nickel-cobalt-manganese-aluminum oxide and HBO₂ are mixed according to a mass ratio of 1:0.005 in the first stage of the oxidative calcination.

### Embodiment 17

A difference from Embodiment 1 is that in the step (3), HBO₂ is replaced with H₂B₄O₇.

### Embodiment 18

(1) A nickel-cobalt-manganese-aluminum hydroxide (molar ratio: Ni:Co:Mn:AI=90:7:2:1) and LiOH are dry-mixed in a mixer according to a molar ratio of 1:1.025, a dry-mixed material is calcined in an ordinary box-type furnace at 650°C under a condition of feeding an oxygen-containing gas (the volume concentration of oxygen is 20%, and the flow rate is 5 L/min) for 12 h, cooled, pulverized and sieved, to obtain a quaternary cathode electrode material matrix LiNi_{0.9}Co_{0.07}Mn_{0.02}Al_{0.01}O₂.
(2) The obtained quaternary cathode electrode material matrix is mixed with distilled water according to a ratio of 1:1, and after being stirred at 200 rpm for 15 minutes, it is placed in a vacuum drying oven at 100°C for 15 h, and taken out after drying.
(3) The dried quaternary cathode electrode material matrix and HBO₂ are dry-mixed according to a mass ratio of 1:0.001, and steps of the dry-mixing are as follows: firstly the quaternary cathode electrode material matrix and HBO₂ are stirred at a high speed (the speed is 2500 rpm), and stirred for 10 minutes, so that metaboric acid powder is evenly adhered to the surface of nickel-cobalt-manganese-aluminum hydroxide particles. The dry-mixed material is calcined at 180°C under a condition of feeding an oxygen-containing gas (the volume concentration of oxygen is 20%, and the flow rate is 5 L/min) for 5 h (a first stage of oxidative calcination), and then the temperature is risen to 300°C and kept for 7 h (a second stage of oxidative calcination), it is cooled and sieved, to obtain the boron oxide-coated cathode electrode material.

### Embodiment 19

(1) A nickel-cobalt-manganese-aluminum hydroxide (molar ratio: Ni:Co:Mn:AI=90:7:2:1) and LiOH are dry-mixed in a mixer according to a molar ratio of 1:1.5, a dry-mixed material is calcined in an ordinary box-type furnace at 800°C under a condition of feeding an oxygen-containing gas (the volume concentration of oxygen is 80%, and the flow rate is 20 L/min) for 4 h, cooled, pulverized and sieved, to obtain a quaternary cathode electrode material matrix Li_{1.06}Ni_{0.9}Co_{0.07}Mn_{0.02}Al_{0.01}O₂.
(2) The obtained quaternary cathode electrode material matrix is mixed with distilled water according to a ratio of 1:1, and after being stirred at 400 rpm for 5 minutes, it is placed in a vacuum drying oven at 200°C for 5 h, and taken out after drying.
(3) The dried quaternary cathode electrode material matrix and HBO₂ are dry-mixed according to a mass ratio of 1:0.001, and steps of the dry-mixing are as follows: firstly the quaternary cathode electrode material matrix and HBO₂ are stirred at a high speed (the speed is 2500 rpm), and stirred for 10 minutes, so that metaboric acid powder is evenly adhered to the surface of nickel-cobalt-manganese-aluminum hydroxide particles. The dry-mixed material is calcined at 180°C under a condition of feeding an oxygen-containing gas (the volume concentration of oxygen is 80%, and the flow rate is 20 L/min) for 1 h (a first stage of oxidative calcination), and then the temperature is risen to 300°C and kept for 3 h (a second stage of oxidative calcination), it is cooled and sieved, to obtain the boron oxide-coated cathode electrode material.

### Contrast example 1

(1) A nickel-cobalt-manganese-aluminum hydroxide (molar ratio: Ni:Co:Mn:AI=90:7:2:1) and LiOH are dry-mixed in a mixer according to a molar ratio of 1:1.025, a dry-mixed material is calcined in an ordinary box-type furnace at 700°C under an oxygen atmosphere for 8 h, cooled, pulverized and sieved, to obtain a quaternary cathode electrode material matrix.
(2) The obtained cathode electrode material is mixed with distilled water according to a ratio of 1:1, and after being stirred at 300 rpm for 10 minutes, it is placed in a vacuum drying oven at 150°C for 10 h, and taken out after drying.
(3) A nickel-cobalt-manganese-aluminum oxide (molar ratio: Ni:Co:Mn:AI=90:7:2:1) and H₃BO₃ are dry-mixed according to a molar ratio of 1:0.001, and steps of the dry-mixing are as follows: firstly the quaternary cathode electrode material matrix and H₃BO₃ are stirred at a high speed (the speed is 2500 rpm), and stirred for 10 minutes, so that metaboric acid powder is evenly adhered to the surface of nickel-cobalt-manganese-aluminum hydroxide particles. The dry-mixed material is calcined at 300°C under the oxygen atmosphere for 8 h, cooled and sieved, to obtain the coated quaternary cathode electrode material.

### Contrast example 2

(1) A nickel-cobalt-manganese-aluminum hydroxide (molar ratio: Ni:Co:Mn:AI=90:7:2:1) and LiOH are dry-mixed in a mixer according to a molar ratio of 1:1.025, a dry-mixed material is calcined in an ordinary box-type furnace at 700°C under an oxygen atmosphere for 8 h, cooled, pulverized and sieved, to obtain a quaternary cathode electrode material matrix.
(2) The obtained cathode electrode material is mixed with distilled water according to a ratio of 1:1, and after being stirred at 300 rpm for 10 minutes, it is placed in a vacuum drying oven at 150°C for 10 h, and taken out after drying.
(3) A nickel-cobalt-manganese-aluminum oxide (molar ratio: Ni:Co:Mn:AI=90:7:2:1) is calcined at 300°C under the oxygen atmosphere for 8 h, cooled and sieved, to obtain the quaternary cathode electrode material.

Preparation of button battery: the cathode electrode materials prepared in the above embodiments and contrast examples are used respectively, the cathode electrode material, a carbon black conductive agent, a binder polyvinylidene fluoride (PVDF) and N-methylpyrrolidone (NMP) of which the mass ratio is 95:2.5:2.5:5 are mixed uniformly to prepare battery cathode electrode slurry. The slurry is coated on an aluminum foil with a thickness of 20-40 um, a cathode electrode piece is made after vacuum-drying and rolling, a lithium metal piece is used as a anode electrode, the electrolyte ratio is 1.15 M LiPF₆EC:DMC (1:1vol %), and a button battery is assembled.

The electrical performance of the material is tested by using a blue battery test system at 45°C, and the test voltage range is 3 V-4.3 V; the formed capacity is tested, and 1-cycle, 20-cycle and 50-cycle capacities and capacity retention rates are tested. Test results are shown in Table 1.

**Table 1**

| Implementation scheme | Average particle diameter (µm) | Coating layer thickness (nm) | Charging specific capacity (mAh/g) | Discharging specific capacity (mAh/g) | First effect | 50-cycle retention rate |
|---|---|---|---|---|---|---|
| Embodiment 1 | 10.1 | 7-8 | 235.4 | 221.4 | 94.1 | 99.1 |
| Embodiment 2 | 10.2 | 5-8 | 232.1 | 217.6 | 93.7 | 98.6 |
| Embodiment 3 | 10.1 | 5-8 | 233.3 | 218.7 | 93.8 | 98.7 |
| Embodiment 4 | 9.8 | 5-10 | 230.1 | 214.9 | 93.4 | 92.4 |
| Embodiment 5 | 9.9 | 5-10 | 230.6 | 216.1 | 93.7 | 91.7 |
| Embodiment 6 | 10.3 | 5-10 | 232.3 | 220.4 | 94.8 | 97.2 |
| Embodiment 7 | 9.8 | 5-10 | 233.1 | 219.6 | 94.2 | 97.5 |
| Embodiment 8 | 9.7 | 5-10 | 230.6 | 216.7 | 93.9 | 96.5 |
| Embodiment 9 | 9.9 | 5-10 | 230.9 | 217.1 | 94.0 | 91.3 |
| Embodiment 10 | 10.1 | 5-10 | 233.3 | 219.7 | 94.2 | 92.1 |
| Embodiment 11 | 10.2 | 5-10 | 230.9 | 218.7 | 94.7 | 97.3 |
| Embodiment 12 | 10.4 | 5-10 | 231.6 | 215.8 | 93.2 | 92.6 |
| Embodiment 13 | 10.3 | 5-10 | 230.9 | 216.3 | 93.6 | 91.1 |
| Embodiment 14 | 9.7 | 5-10 | 230.4 | 217.6 | 94.4 | 92.3 |
| Embodiment 15 | 10.2 | 5-10 | 231.5 | 219.3 | 94.7 | 96.6 |
| Embodiment 16 | 10.1 | 5-10 | 228.6 | 214.3 | 93.7 | 91.4 |
| Embodiment 17 | 10.2 | 5-10 | 234.6 | 220.9 | 94.2 | 98.8 |
| Embodiment 18 | 9.6 | 5-10 | 231.3 | 218.6 | 94.5 | 98.1 |
| Embodiment 19 | 10.5 | 5-10 | 233.1 | 220.9 | 94.7 | 97.9 |
| Contrast example 1 | 10.2 | 5-10 | 226.7 | 201.8 | 89.0 | 89.4 |
| Contrast example 2 | 9.7 | / | 227.3 | 202.5 | 89.1 | 87.9 |

From the above descriptions, it may be seen that the above embodiments of the present disclosure achieve the following technical effects_{∘}

By oxidizing and sintering the boron source including the metaboric acid and/or the pyroboric acid together with the quaternary cathode electrode material matrix, since the metaboric acid and the pyroboric acid release the less water at a high temperature than the boric acid, while the oxidative sintering is performed to form the boron oxide coating layer, there is not a problem that the boron source and the quaternary cathode electrode material matrix are difficult to mix uniformly due to the release of the water in the boric acid and the viscosity of a system, thereby the uniform coating of the quaternary cathode electrode material matrix may be achieved, the contact area between the quaternary cathode electrode material matrix in the boron oxide-coated quaternary cathode electrode material after the oxidative sintering and the electrolyte is effectively reduced, side reactions on the surface of the quaternary cathode electrode material in the charging and discharging processes are reduced, and the cycle stability of the cathode electrode material is improved. In addition, because the metaboric acid and the pyroboric acid need to remove the less water than the boric acid, the reaction efficiency of the above oxidative sintering is improved.

The above are only preferred embodiments of the present disclosure, and are not intended to limit the present disclosure. For those skilled in the art, the present disclosure may have various modifications and changes. Any modifications, equivalent replacements, improvements and the like made within the spirit and principle of the present disclosure shall be included within a scope of protection of the present disclosure.

## Claims

1. A boron oxide-coated quaternary cathode electrode material, wherein the boron oxide-coated quaternary cathode electrode material comprises a quaternary cathode electrode material matrix and a boron oxide coating layer, the boron oxide coating layer is arranged on the surface of the quaternary cathode electrode material matrix, and the quaternary cathode electrode material matrix is LiₐNiₓCo_{y}Mn_{z}Al_{(1-x-y-z)}O₂, wherein a=1-1.06, x=0.8-0.9, y=0.01-0.1, and z=0.01-0.1.

2. The boron oxide-coated quaternary cathode electrode material according to claim 1, wherein the particle diameter of the quaternary cathode electrode material is 8-12 µm.

3. The boron oxide-coated quaternary cathode electrode material according to claim 1, wherein the thickness of the boron oxide coating layer is 5-10 nm.

4. A preparation method for a boron oxide-coated quaternary cathode electrode material, wherein the preparation method comprises:
performing first oxidative sintering on a mixture comprising a quaternary cathode electrode material matrix and a boron source, to obtain the boron oxide-coated quaternary cathode electrode material, wherein the quaternary cathode electrode material matrix is LiₐNiₓCo_{y}Mn_{z}Al_{(1-x-y-z)}O₂, wherein a=1-1.06, x=0.8-0.9, y=0.01-0.1, and z=0.01-0.1, and the boron source is selected from one or both of a metaboric acid and a pyroboric acid.

5. The preparation method according to claim 4, wherein the sintering temperature of the first oxidative sintering is 150-350°C, and the time is 4-12 h.

6. The preparation method according to claim 5, wherein the first oxidative sintering is divided into a first stage and a second stage which are performed in sequence, and the sintering temperature of the first stage is lower than the sintering temperature of the second stage.

7. The preparation method according to claim 6, wherein the sintering temperature of the first stage is 150-200°C, and the time is 1-5 h.

8. The preparation method according to claim 6, wherein the sintering temperature of the second stage is 200-350°C, and the time is 3-7 h.

9. The preparation method according to any one of claims 4 to 8, wherein the mass ratio of the boron source to the quaternary cathode electrode material matrix is 0.001-0.003:1.

10. The preparation method according to claim 4, wherein the preparation method further comprises a mixing process of mixing the quaternary cathode electrode material matrix and the boron source, to obtain the mixture.

11. The preparation method according to claim 10, wherein the mixing process comprises:
mixing the quaternary cathode electrode material matrix and the boron source and performing first stirring, to obtain the mixture of the quaternary cathode electrode material matrix and the boron source, wherein the speed of the first stirring is 2000-3000 rpm, and the time is 10-20 min.

12. The preparation method according to claim 4, wherein the preparation method further comprises a preparation process of a quaternary cathode electrode material matrix, and the preparation process comprises: performing second oxidative sintering on a mixture of NiₓCo_{y}Mn_{z}Al_{(1-x-y-z)}OH and LiOH, to obtain the quaternary cathode electrode material matrix.

13. The preparation method according to claim 12, wherein the molar ratio of LiOH and NiₓCo_{y}Mn_{z}Al_{(1-x-y-z)}OH is 1-1.5:1, preferably the sintering temperature of the second oxidative sintering is 650-800°C, and the time is 4-12 h.

14. The preparation method according to claim 4, wherein the preparation method further comprises a washing process of the quaternary cathode electrode material matrix, and the washing process comprises: after performing second stirring on dispersion liquid containing washing liquid and the quaternary cathode electrode material matrix, drying, preferably the speed of the second stirring is 200-400 rpm, and the time is 5-15 min; preferably the temperature of the drying is 100-200°C, and the time is 5-15 h.

15. A lithium ion battery, wherein the lithium ion battery comprises a cathode electrode material, a anode electrode material and an electrolyte, wherein the cathode electrode material comprises a quaternary cathode electrode material, and the quaternary cathode electrode material is the boron oxide-coated quaternary cathode electrode material according to claims 1 to 3 or the boron oxide-coated quaternary cathode electrode material prepared by the preparation method according to any one of claims 4 to 14.
